# EUROPÄISCHE PATENTSCHRIFT

(11) **EP 1 404 548 B1**
(45) Veröffentlichungstag und Bekanntmachung des Hinweises auf die Patenterteilung: **23.11.2005**
(21) Anmeldenummer: 02753003.9
(22) Anmeldetag: 09.07.2002
(51) Int. Cl.: B60R 21/01

(54) **ÜBERWACHUNGSSYSTEM FÜR EINEN FAHRZEUGINNENRAUM**
SYSTEM FOR MONITORING THE INTERIOR OF A VEHICLE
SYSTEME DE SURVEILLANCE POUR HABITACLE DE VEHICULE

(30) Priorität: 10.07.2001 DE 10133512
(43) Veröffentlichungstag der Anmeldung: 07.04.2004
(73) Patentinhaber: SIEMENS AKTIENGESELLSCHAFT, 80333 München (DE)
(72) Erfinder: CHRISTL, Markus, 95643 Tirschenreuth (DE); ERTL, Ludwig, 93057 Regensburg (DE); KÖHLER, Thorsten, 93180 Deuerling (DE); ZITTLAU, Dirk, 92348 Stöckelsberg (DE)
(86) Internationale Anmeldenummer: PCT/DE2002/002514
(87) Internationale Veröffentlichungsnummer: WO 2003/006279

(56) Entgegenhaltungen:
- WO-A-01/14910
- WO-A-98/49031
- US-A- 5 482 314
- US-A- 5 906 393

## Beschreibung

Die Erfindung bezieht sich auf ein Überwachungssystem und ein Verfahren zu Überwachung für einen Fahrzeuginnenraum mit einer Einrichtung zur Erfassung von den Belegungszustand eines Ortes in dem Fahrzeuginnenraum wiedergebenden Daten und mit einer Recheneinheit zur Gewinnung von Zugehörigkeitswahrscheinlichkeiten zu Belegungsklassen für den Ort in dem Fahrzeuginnenraum mit Hilfe von den Belegungszustand des Ortes in dem Fahrzeuginnenraum wiedergebenden Merkmalen aus Messdaten der Einrichtung.

Ein Überwachungssystem gemäss dem Oberbegriff des Anspruchs 1 und ein Verfahren gemäss dem Oberbegriff des Anspruchs 7 sind aus WO 98/49031 bekannt.

Aus der WO 00 65538 sind ein Verfahren und eine Vorrichtung zur Ermittlung der Position eines Objektes in einem Fahrzeug bekannt. Diesem Verfahren liegt das Problem zugrunde, dass Airbag-Systeme in Kraftfahrzeugen in Einzelfällen zu Verletzungen von Personen führen können. Der Grund hierfür liegt meist darin, dass das Airbag-System über keine zuverlässige Information über die Position des Beifahrers verfügt. Der Aufblasvorgang wird für Extremsituationen ausgelegt, d. h. eine erwachsene, angeschnallte Person darf beim Unfall nicht bis zur Armaturentafel durchschlagen. Befindet sich der Kopf des Beifahrers aber zum Aufblaszeitpunkt zu dicht an der Armaturentafel (out-of-position), dann kann diese Auslegung des Airbag-Systems zu schweren Verletzungen führen. Zahlreiche Systeme sind in der Entwicklung, mit denen diesem Problem abgeholfen werden soll. Beispielsweise wird versucht, mit Hilfe von Laser-Triangulationssystemen mittlere Entfernungen in dem jeweils untersuchten Fahrzeuginnenraum zu messen, gegebenenfalls auch unter Zuhilfenahme von Ultraschall, um daraus die Position des Beifahrers, insbesondere seines Kopfes, zu ermitteln. Neben optischen und akustischen Systemen kommen auc solche, mit Sensoren arbeitenden Systeme zum Einsatz, die die Gewichtsbelastung des Beifahrersitzes bestimmen. Eine noch höhere Sicherheit lässt sich durch die Kombination verschiedener Erfassungssysteme erreichen.

Dieselben Messverfahren lassen sich auch einsetzen, um die Belegung anderer Sitze in dem Fahrzeug zu bestimmen, beispielsweise der Rücksitze. Noch weiter verallgemeinert, lässt sich ein derartiges Messverfahren auch ausnutzen, um die Belegung einer Gepäckablage zu bestimmen.

Das Messsystem ist Teil eines Überwachungssystems, das zusatzlich mit einer Einrichtung zur Erfassung des Belegungszustandes eines Sitzes, insbesondere des Beifahrersitzes, oder auch mehrerer Sitze oder Bereiche innerhalb des Fahrzeugs ausgestattet ist. In Abhängigkeit vom erfassten Belegungszustand wird die Auslöseentscheidung des Airbag-Steuergerätes beeinflusst. Der Belegungszustand wird wiedergegeben mit Hilfe sogenannter. Belegungsklassen. Jedem von dem Überwachungssystem erfassten Objekt innerhalb des Fahrzeugs wird eine diskrete Belegungsklasse zugewiesen. Bei den Belegungsklassen handelt es sich typischerweise um folgende Klassen:
1. leerer Sitz,
2. Kindersitz, nach rückwarts gerichtet,
3. Kindersitz, nach vorwärts gerichtet,
4. erwachsene Person
5. Kind.

Es ist sowohl eine gröbere als auch eine feinere Unterteilung der Belegungsklassen denkbar. Eine Zuordnung einer Person bzw. eines Objekts zu einer der Belegungsklassen erfolgt aufgrund von Merkmalen, die mittels eines Auswertealgorithmus in einer Recheneinheit gewonnen werden. Sämtliche Merkmale spannen einen Merkmalsraum auf, dessen Dimension der Zahl der Merkmale entspricht.

Fällt ein aktueller Satz von Merkmalen in den Bereich einer bestimmten Klasse im Merkmalsraum, so wird der Belegungszustand des Sitzes bzw. des Bereichs in dem Fahrzeuginnenraum in diesem Merkmalsraum repräsentiert.

Ein Problem besteht darin, dass die Klassifikation aufgrund technischer Beschränkungen der Sensorsysteme von einer Belegungsklasse zu einer anderen wechselt oder zwischen den Belegungsklassen hin- und herspringt, obwohl sich der reale Belegungszustand nicht geändert hat. Dies ist insbesondere dann der Fall, wenn die aktuellen Merkmale im Merkmalsraum in der Nähe der Grenzfläche zwischen verschiedenen Belegungsklassen liegen und die Merkmale aufgrund von Messungenauigkeiten leicht variieren.

Bei dem bekannten Überwachungssystem stellt sich das weitere Problem, dass sich aufgrund technischer Beschränkungen des Sensorsystems oder der Sensorsysteme, falls zwei oder mehrere Sensorsysteme in Verbindung miteinander zum Einsatz kommen, Belegungsklassen im Merkmalsraum überschneiden. In diesem Fall ist eine eindeutige Zuordnung der Merkmale nur zu einer einzigen Belegungsklasse nicht möglich.

Es ist die Aufgabe der Erfindung, hier Abhilfe zu schaffen.

Erfindungsgemäß wird die Aufgabe bei einer Vorrichtung der eingangs genannten Art dadurch gelöst, dass die Recheneinheit mit einem Speicher in Verbindung steht, in dem Übergangswahrscheinlichkeiten zwischen den Belegungsklassen abgelegt sind, gemäß denen Übergänge zwischen den Belegungsklassen eintreten.

Gemäß der Erfindung werden Übergangswahrscheinlichkeiten festgelegt, gemäß denen Übergänge zwischen den Belegungsklassen stattfinden. Die Zuordnung zu den Belegungsklassen erfolgt aufgrund von Zugehörigkeitswahrscheinlichkeiten. Diese sind possibilistische Wahrscheinlichkeiten, d. h. die Zugehörigkeit zu einer Klasse liegt zwischen 0 und 1, aber die Summe uber sämtliche Zugehörigkeitswahrscheinlichkeiten muss nicht 1 sein wie bei probabilistischen Wahrscheinlichkeiten. Possibilistische Wahrscheinlichkeiten und darauf basierende Klassifikationsmethoden sind bekannt, beispielsweise bei neuronalen Netzen, Fuzzy Clustering, Vector Support Machines.

Der Kern der Erfindung liegt in der Definition der Übergangswahrscheinlichkeiten zwischen zwei Belegungsklassen. Auf diese Weise lasst sich die Zahl der Messzyklen steuern, innerhalb derer die Klassifikation von einer Belegungsklasse zu einer anderen springen darf.

Beispielsweise muss der Übergang von "leerer Sitz" zu "erwachsene Person" sehr schnell möglich sein, da der Airbag bei leerem Sitz typischerweise ausgeschaltet ist, bei einer Person aber aktiviert werden muss. Daher muss eine hohe Übergangswahrscheinlichkeit von "leerer Sitz" zu "erwachsene Person" vorgesehen werden. Umgekehrt ist es kritisch, wenn einer Person der Airbag abgeschaltet wird, weil vorübergehend das Klassifikationsergebnis auf "leerer Sitz" springt. Ebenfalls kritisch ist der Übergang von "erwachsene Person" zu "Kindersitz", da bei dem Erwachsenen der Airbag ausgelöst wird, bei einem auf dem Sitz aufgebrachten Kindersitz jedoch nicht. Auch in diesem Fall muss ein Übergang zugelassen werden. Die Übergangswahrscheinlichkeit muss jedoch klein sein, so dass nach mehreren übereinstimmenden Messzyklen doch ein Übergang stattfinden kann. Durch die kleine Übergangswahrscheinlichkeit wird somit eine hohe Sicherheit eingebaut, durch die ein Aussetzen der Funktion des Airbags bei einer erwachsenen Person verhindert wird.

Ebenso bezieht sich die Erfindung auf ein gattungsgemäßes Überwachungssystem für einen Fahrzeuginnenraum, das dadurch gekennzeichnet ist, dass ein Schwellwert festgelegt ist und dass die Merkmale erst dann einer Belegungsklasse zugewiesen sind, wenn sie oberhalb des Schwellwerts liegen.

Die Zuordnung zu einer Belegungsklasse erfolgt aufgrund folgender Regeln: Die Zugehörigkeit zu dieser Belegungsklasse ist die höchste. Vorzugsweise liegt zusätzlich die Zugehörigkeit oberhalb eines erfindungsgemäß eingeführten Schwellwerts, der der Recheneinheit bei der Implementierung des Rechenalgorithmus vorgegeben werden kann. Die Grenzfläche zwischen zwei Belegungsklassen im Merkmalsraum liegt genau dort, wo die möglichen Zugehörigkeitswahrscheinlichkeiten eines Merkmalssatzes den gleichen Wert annehmen.

Für Bereiche, in denen die Zugehörigkeitswahrscheinlichkeiten zu samtlichen Belegungsklassen unterhalb der Schwellwerte liegen oder in denen die Zugehörigkeitswahrscheinlichkeiten zu zwei Belegungsklassen den gleichen Wert annehmen, wird kein Klassifikationsergebnis ausgegeben. Somit lässt sich eine weitere Belegungsklasse einführen: 6. keine Klassifikation möglich. Durch diese Implementierung ist das weitere Problem, nämlich die Überschneidung von Bereichen verschiedener Belegungsklassen, aufgehoben.

Vorteilhafte Weiterbildungen der Erfindung ergeben sich aus den Unteransprüchen.

Die Erfindung lässt sich besonders dann mit Vorteil einsetzen, wenn das Überwachungssystem zusätzlich mit einem Schalter oder einem Sensor zur Erfassung des Öffnungszustandes mindestens einer Tür des Fahrzeugs ausgestattet ist. Die Recheneinheit ist dann mit dem Schalter bzw. dem Sensor über eine Datenleitung verbunden. Je nachdem, ob eine oder mehrere Türen geöffnet oder geschlossen sind, erhält die Recheneinheit diese Information. In der Recheneinheit steht ein Algorithmus zur Verfügung, nach dem die Übergangswahrscheinlichkeiten in Abhängigkeit davon einstellbar sind, wann die Tür zuletzt geöffnet wurde. Auf diese Weise wird auch dann eine geeignete Übergangswahrscheinlichkeit zwischen zwei Belegungsklassen vorgegeben, wenn nach dem Schließen der Tür das Überwachungssystem nach einem Reset neu aktiviert wird und keine Daten aus der Vergangenheit für die Gewinnung geeigneter Ubergangswahrscheinlichkeiten zur Verfügung stehen. Damit auch bei erstmaliger Aktivierung des Überwachungssystems oder nach einem Reset geeignete Übergangswahrscheinlichkeiten für das Überwachungssystem zur Verfügung stehen, werden diese der Recheneinheit vorgegeben, so dass diese nach Erkennen des Schließens der Fahrzeugtür diese vorgegebenen Übergangswahrscheinlichkeiten verwendet. Auf diese Weise kann das Überwachungssystem auch in dieser Situation schnell auf eine reale Veränderung des Belegungszustandes reagieren, beispielsweise, wenn eine Person aussteigt und einen Kindersitz auf den Beifahrersitz stellt.

Besonders vorteilhaft ist es, wenn die Übergangswahrscheinlichkeiten in dem Speicher als Matrixelemente abgelegt sind.

In einer Ausbildung der Erfindung werden die Ubergangswahrscheinlichkeiten durch Zahlenwerte ausgedrückt, die die Anzahl von Klassifikationszyklen verkörpern, nach denen ein Wechsel eines Belegungszustandes von einer Belegungsklasse in eine andere Belegungsklasse als eingetreten gilt. Alternativ werden in der Matrix Übergangswahrscheinlichkeiten als Ziffern zwischen 0 und 1 abgelegt.

Im Fall von n Belegungsklassen wird eine n x n-Matrix definiert, in der die Übergangswahrscheinlichkeiten zusammengefasst sind. Dabei wird für jeden möglichen Ausgangszustand, d. h. das aktuelle Klassifikationsergebnis, eine Übergangswahrscheinlichkeit in jeden möglichen Zielzustand, d. h. das neue Klassifikationsergebnis, definiert.

Die Übergangswahrscheinlichkeiten orientieren sich an der in der Praxis zu erwartenden Häufigkeit der entsprechenden Zustandsänderungen unter Berücksichtigung der Kritizität dieses Übergangs im Hinblick auf die Beeinflussung des Airbagauslöseverhaltens. Beispielsweise ist ein Übergang von der Belegungsklasse "rückwärts gerichteter Kindersitz" in die Klasse "vorwärts gerichteter Kindersitz" als eher unkritisch einzustufen, da für beide Klassifikationsergebnisse der Airbag abgeschaltet ist.

Die Erfindung bezieht sich ebenfalls auf ein Verfahren zur Uberwachung eines Fahrzeuginnenraums, wobei Daten gemessen werden, die den Belegungszustand eines Ortes in dem Fahrzeuginnenraum wiedergeben, und wobei Zugehörigkeitswahrscheinlichkeiten zu Belegungsklassen für einen ausgewählten Ort in dem Fahrzeuginnenraum mit Hilfe von den Belegungszustand eines Ortes in dem Fahrzeuginnenraum wiedergebenden Merkmalen aus gemessenen Daten gewonnen werden. Das erfindungsgemäße Verfahren ist dadurch gekennzeichnet, Übergangswahrscheinlichkeiten zwischen den Belegungsklassen bestimmt werden, gemäß denen Übergänge zwischen den Belegungsklassen eintreten.

Dabei werden in einer Weiterbildung die Übergangswahrscheinlichkeiten darnach festgelegt, wie wahrscheinlich der Übergang angesehen wird. Dies lässt sich beispielsweise experimentell bestimmen.

Die Übergangswahrscheinlichkeiten können jedoch auch darnach festgelegt werden, wie zuverlässig die Zugehörigkeitswahrscheinlichkeiten gewonnen werden. Wenn aufgrund einer Ungenauigkeit des Messsystems Merkmale, die zu einer Belegungsklasse gehören, aus messtechnischen Gründen nicht mit so hoher Sicherheit festgelegt werden können, kann dies durch entsprechend höhere Übergangswahrscheinlichkeiten zu anderen Belegungsklassen ausgeglichen werden, in denen die Zugehörigkeitswahrscheinlichkeiten mit höherer Sicherheit bestimmt werden können.

Besonders geeignet bei der Auslegung des Überwachungssystems ist die Festlegung der Übergangswahrscheinlichkeiten darnach, wie relevant sie für die Sicherheit einer Person sind. Diejenige Belegungsklasse, bei der der Airbag aktiviert sein muss, muss daher mit einer hohen Übergangswahrscheinlichkeit aus einer anderen Belegungsklasse zu ihr hin und mit einer geringen Ubergangswahrscheinlichkeit aus ihr heraus ausgestattet werden.

In einer anderen Weiterbildung der Erfindung ist vorgesehen, dass die Übergangswahrscheinlichkeiten in Abhängigkeit von der Zeit oder dem Bewegungszustand des Fahrzeugs verändert werden.

Ebenso umfasst die Erfindung in einer vorteilhaften Ausführung ein Verfahren, bei dem die Werte für die Zugehörigkeitswahrscheinlichkeiten durch Mittelung zeitlich geglättet werden. Durch die Berechnung des statistischen Mittelwerts der zuletzt gewonnenen Klassifikationen, d. h. durch eine Glättung der Werte über die Zeit, kann der Einfluss von Messfehlern ebenfalls gemildert werden.

Hierzu werden die Klassifikationsergebnisse über einen bestimmten, dem Problem angepassten Zeitraum gespeichert. Durch Vergleich mit den in der Vergangenheit gewonnenen Klassifikationen werden dann Mehrdeutigkeiten bei der Zugehörigkeit eines Merkmals zu einer Belegungsklasse aufgehoben.

Ebenso lasst sich mit Vorteil eine auf einen Zeitraum bezogene Gewichtung von Zugehörigkeitswahrscheinlichkeiten durchführen.

Dabei ist es vorteilhaft, wenn aktuelle Zugehörigkeitswahrscheinlichkeiten im Vergleich zu früher ermittelten Zugehörigkeitswahrscheinlichkeiten stärker gewichtet werden.

Dabei kann die Gewichtung der jeweils aktuellen Zugehörigkeitswahrscheinlichkeiten im Vergleich zu der Gewichtung der historischen Zugehörigkeitswahrscheinlichkeiten in Abhängigkeit von entsprechenden Steuerparametern für jede einzelne Belegungsklasse individuell beeinflusst werden.

Insbesondere kann in Abhängigkeit von dem letzten Klassifikationsergebnis die Gewichtung der aktuellen Zugehörigkeitswahrscheinlichkeiten in den einzelnen Belegungsklassen-Historien mit Hilfe der oben beschriebenen Übergangswahrscheinlichkeiten gesteuert werden.

Dies entspricht einer bedingten Wahrscheinlichkeit für das Eintreten eines neuen Klassifikationszustandes unter den Bedingungen des aktuellen Klassifikationszustandes und den aktuellen Klassenzugehörigkeiten der anderen Klassifikationsergebnisse. Dadurch können beispielsweise die mittleren Zugehörigkeiten von Belegungsklassen, die zur Klassifikationsgruppe des aktuellen Klassifikationsergebnisses gehören (z. B. Gruppe der Kindersitze) verstärkt werden, während die mittleren Zugehörigkeiten von Belegungsklassen, die nicht zur Klassifikationsgruppe des aktuellen Klassifikationsergebnisses gehören (z. B. Gruppe der erwachsenen Personen) abgeschwächt werden, wodurch ein Übergang vom Klassifikationszustand "Kindersitz" in den Klassifikationszustand "erwachsene Person" unwahrscheinlicher wird.

Nach dem erfindungsgemäßen Verfahren wird in einer vorteilhaften Ausführungsweise vorgesehen, dass, während die Tür geöffnet ist, eine Sicherheitseinrichtung zum Schutz von Personen und/oder Objekten in dem Fahrzeuginnenraum abgeschaltet bleibt. Insbesondere wird vorgesehen, dass ein Airbag abgeschaltet bleibt, solange die Tür geöffnet ist. Dadurch wird eine Fehlauslösung des Airbags bei Stillstand des Fahrzeugs vermieden.

Es entspricht der Erfahrung, dass unmittelbar nach dem Einsteigen und dem Schließen der Tür des Fahrzeugs Wechsel in der Belegung der Sitze des Fahrzeugs noch vorgenommen werden; beispielsweise wird ein Kindersitz verstellt. Daraus resulieren hohe Obergangswahrscheinlichkeiten für Übergänge zwischen den Belegungsklassen. Daher werden zunächst nach dem Schließen einer Fahrzeugtür oder nach dem Schließen aller Fahrzeugtüren hohe Übergangswahrscheinlichkeiten bei der Berechnung der Belegungsklassen durch die Recheneinheit zugelassen. Über den Lauf der Zeit werden die Übergangswahrscheinlichkeiten abgesenkt, was der Tatsache entspricht, dass während der Fahrdauer Wechsel in der Belegung der Sitze unwahrscheinlicher werden.

Dieser Tatsache wird in einer vorteilhaften Weiterbildung des Verfahrens auch dadurch Rechnung getragen, dass über Ergebnisse von Klassifikationen eines Belegungszustandes zu Belegungsklassen des Sitzes je Belegungsklasse eine Mittelwertbildung vorgenommen wird, wobei die Anzahl der in die Mittelwertbildung einfließenden Ergebnisse im Laufe der Zeit erhöht wird. Dadurch wird eine zunehmende Glättung der Werte für den Belegungszustand erreicht.

Alternativ besteht die Möglichkeit, dass eine Anpassung der Ubergangswahrscheinlichkeit nur für eine spezielle, ausgewahlte Belegungsklasse vorgenommen wird, beispielsweise für die Belegungsklasse "Person normal sitzend". Solange nicht uber einen bestimmten Zeitraum mit hoher Wahrscheinlichkeit die Klassifikation "Person normal sitzend" vorgenommen wird, wird davon ausgegangen, dass es sich bei dem von dem Sensor festgestellten Objekt um einen Kindersitz handelt und entsprechend die die Belegungsklasse "Kindersitz" zugewiesen.

Eine weitere Moglichkeit in der Anpassung der Ubergangswahrscheinlichkeiten in Abhangigkeit von bestimmten Kriterien besteht darin, dass die Stabilität des Klassifikationsergebnisses berucksichtigt wird: Wenn sich das Klassifikationsergebnis und die entsprechenden Zugehörigkeitswahrscheinlichkeiten auf einen stabilen Klassifikationszustand eingeschwungen haben, werden die Übergangswahrscheinlichkeiten angepasst, so dass der stabilisierte Klassifikationszustand nicht mehr durch temporäre Schwankungen in den Zugehörigkeitswahrscheinlichkeiten gestört werden kann.

Verallgemeinert bedeutet dies, dass die Übergangswahrscheinlichkeiten zwischen Belegungsklassen in Abhängigkeit von Schwankungen der Zugehörigkeitswahrscheinlichkeiten angepasst werden.

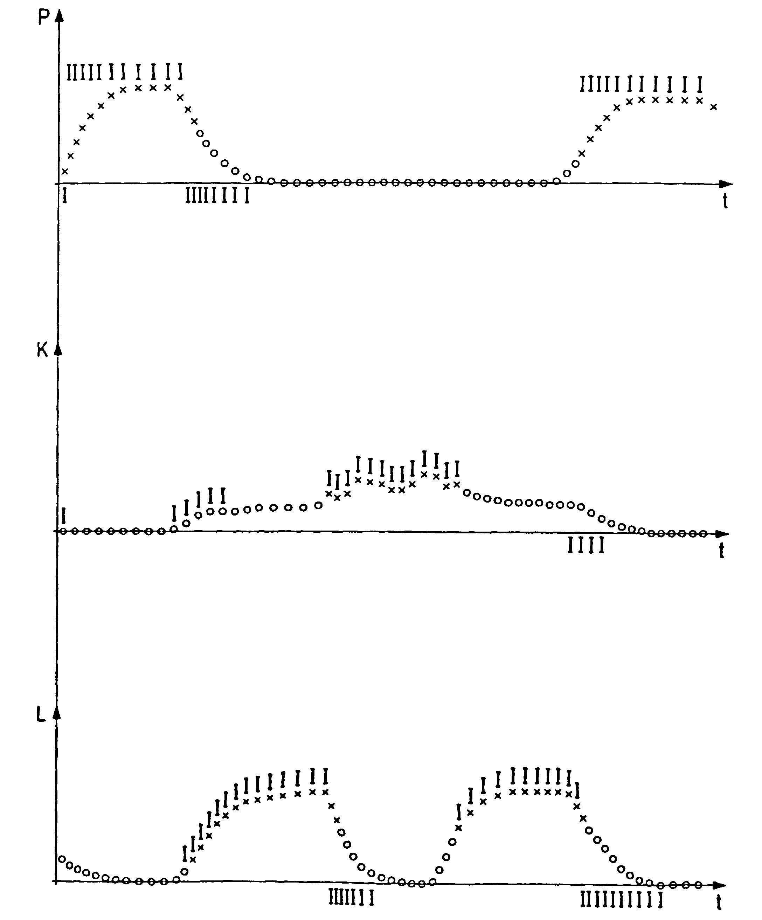

Nachstehend wird die Erfindung in einem Ausführungsbeispiel anhand der Zeichnung näher erläutert. Die einzige Figur zeigt Zugehörigkeitswerte (o) von Belegungsklassen für eine erwachsene Person P, einen Kindersitz K und einen leeren Sitz L als Funktion der Zeit t und Klassifikationsergebnisse (x), die mit Hilfe eines eine Mehrzahl von gemessenen Zugehörigkeitswerten (I), den aktuellen Werten, verwendenden Klassifikationsalgorithmus gewonnen sind.

Dieser berücksichtigt Messergebnisse der Vergangenheit und ist dadurch robust gegenüber Störungen und sporadischen Fehlklassifikationen. Der Klassifikationsalgorithmus berücksichtigt bei einem optischen Sensorsystem das aktuelle dreidimensionale, von einer CMOS- oder einer CCD-Kamera gewonnene Bild und zieht auch die vorhergehenden dreidimensionalen Bilder zur Entscheidungsfindung heran.

Dabei wird die Funktionsweise des Algorithmus anhand einer realen Sitzbelegungsabfolge uber den Lauf der Zeit t dargestellt. Zunachst ist der Sitz von einer Person P belegt, anschließend wird der Sitz von der Person P verlassen (leerer Sitz L). Dann wird ein Kindersitz K auf den Sitz gestellt. Schließlich wird der Kindersitz wieder weggenommen; der Sitz ist wieder leer (Zustand L). Zum Schluss nimmt wieder die Person P den Sitz ein.

Bei diesem zeitlichen Ablauf wird zunächst P durch die Kamera erkannt, was zu sehr hohen aktuellen Werten für P, hingegen zu niedrigen Werten für K und L führt. Mittels des die aktuellen Werte der Vergangenheit mit einbeziehenden Algorithmus werden aus den jeweiligen aktuellen Werten resultierende effektive Konfidenzwerte als Zugehörigkeitswerte berechnet. Hierzu dient beispielsweise ein gewichtetes gleitendes Mittelwertverfahren. Daher steigt in der Figur der effektive Wert für P zunächst bis zur Höhe der aktuellen Werte für P an, während die effektiven Werte für K und L nahezu auf 0 absinken.

Für die Bestimmung des effektiven Klassifikationsergebnisses werden zu dem jeweiligen Zeitpunkt nur diejenigen effektiven Werte herangezogen, die sich oberhalb eines Schwellwertes befinden. Aus diesen wird dann das resultierende Klasssifikationsergebnis als diejenige Klasse ermittelt, die den höchsten effektiven Wert aufweist. Aufgrund der hohen aktuellen Werte für P steht nach dem Einschalten der Kamera und des Überwachungssystems, beispielsweise beim Betätigen des Zündschlosses des Fahrzeugs, bereits nach dem zweiten Klassifikationszyklus das resultierende Klassifikationsergebnis zur Verfügung.

Nachdem die Person ausgestiegen ist, steigt der effektive Wert für L stark an, so dass bereits wieder nach zwei Klassifikationszyklen der leere Sitz als resultierendes Klassifikationsergebnis ausgegeben wird.

Zu dem Zeitpunkt, an dem der Kindersitz K auf den Sitz gestellt wird, sinkt der effektive Wert für L nahezu auf 0 ab, während der effektive Wert für K ansteigt, so dass das resultierende Klassifikationsergebnis sehr schnell auf K umgeschaltet wird. Bei der Feststellung des Kindersitzes K durch das Sensorsystem werden stark schwankende aktuelle Werte für K bestimmt, die jedoch mittels des Algorithmus zu effektiven Werten geglättet werden, die nur noch eine geringe Schwankungsbreite haben.

Die Übergangsphasen zwischen den verschiedenen Belegungsklassen werden durch einstellbare Übergangswahrscheinlichkeiten gesteuert, die in einer Matrix darstellbar sind:

| | L | K | P |
|---|---|---|---|
| L | 0,3 | 0,3 | 0,3 |
| K | 0,3 | 0,3 | 0,3 |
| P | 0,3 | 0,1 | 0,3 |

Die Zahlen stellen die Übergangswahrscheinlichkeiten dar, die zwischen den verschiedenen Belegungszuständen bestehen sollen und die der Recheneinheit vorgegeben sind. Dabei stellen die in einer Spalte unter einander stehenden Belegungsklassen L, K, P die Ausgangs-Belegungsklassen L, K, P die Belegungsklassen, zu denen hin der Wechsel stattfindet. Die Zahlen stellen die Kehrwerte der Anzahlen der Klassifikationszyklen dar, die erforderlich sind, um von einem Klassifikationszustand in einen anderen Klassifikationszustand überzugehen. Große Matrixwerte reprasentieren somit hohe Ubergangswahrscheinlichkeiten, wahrend kleine Matrixwerte kleine Ubergangswahrscheinlichkeiten darstellen.

Da erwachsene Personen P sehr zuverlässig klassifiziert werden können und ein plötzlicher Übergang von P auf einen Kindersitz K sehr unwahrscheinlich ist, ist in der Matrix für den Übergang von P nach K die niedrige Übergangswahrscheinlihckeit 0,1 eingesetzt. Üblicherweise läuft nämlich eine Zustandsänderung von P nach K derart ab, dass die erwachsene Person P den Sitz verlässt und dieser dann leer ist. Erst dann wird der Kindersitz K auf den Sitz gestellt.

In einem anderen Ausführungsbeispiel der Erfindung wird wird bei ebenfalls nur drei Belegungsklassen für die Ubergangswahrscheinlichkeiten die folgende Matrix vorgegeben:

| | L | K | P |
|---|---|---|---|
| L | 0,3 | 0,3 | 0,5 |
| K | 0,3 | 0,3 | 0,3 |
| P | 0,1 | 0,1 | 0,3 |

Hierbei ist berücksichtigt, dass ein Wechsel von einem leeren Sitz L zu einer erwachsenen Person schnell vollzogen werden soll, um umgehend den Airbag zu aktivieren. Daher ist hier eine verhältnismäßig hohe Übergangswahrscheinlichkeit 0,5 eingesetzt.

Hingegen ist ein Wechsel von einer erwachsenen Person zu einem leeren Sitz L mit Vorsicht und langsam vorzunehmen, um den Schutz der Person P zu gewährleisten, auch wenn beispielsweise zwei oder drei fehlerhafte Messungen von dem Sensorsystem vorgenommen werden, die bei einem optischen System beispielsweise darauf beruhen können, dass diese sich nach vorn gebückt hat, um einen Gegenstand im Bereich ihrer Füße zu erreichen, so dass der Oberkörper nicht mehr vom optischen Sensorsystem erfasst worden ist. Daher wird hier ebenso wie zum Kindersitz K hin eine Übergangswahrscheinlichkeit 0,1 eingesetzt.

Die Übergangswahrscheinlichkeiten sind entweder, wie oben dargestellt, durch eine Matrix einmal festgelegt, sie können in einer anderen Ausführungsform der Erfindung aber auch zeitlich veränderbar sein.

Uber den Ablauf der Zeit werden Ereignisse berücksichtigt, die die Übergangswahrscheinlichkeiten zwischen den Belegungsklassen verändern, beispielsweise das Schließen oder Öffnen einer Tur. Aufgrund der Einbeziehung des Türzustandes (offen oder geschlossen) in die Klassifikation lassen sich die Übergangswahrscheinlichkeiten zwischen zwei Belegungsklassen an die Ereignisse anpassen.

Mittels eines Türschalters, beispielsweise eines Reedkontakts, eines mechanischen Schalters oder eines Sensors, insbesondere mittels eines zwei- oder dreidimensionalen Insassenuberwachungssystems wird der Öffnungszustand einer Tür oder mehrerer Türen erfasst.

Wahrend die Tür geöffnet ist, findet keine Klassifikation statt. Der Airbag soll in jedem Fall abgeschaltet sein. Nach dem Schließen der Tür sind Übergänge zwischen den Belegungsklassen sehr wahrscheinlich und werden mit zunehmender Zeit immer unwahrscheinlicher.

Zunachst befindet sich das mit der Recheneinheit verbundene Klassifikationssystem im Reset-Zustand. Der Airbag ist während dieser Zeit abgeschaltet

Dadurch wird verhindert, dass das Klassifikationssystem durch den Kopf oder Oberkörper von Personen, die sich in das Fahrzeuginnere beugen, um beispielsweise einen Kindersitz auf den Beifahrersitz zu stellen oder dort zu befestigen, beeinflusst wird und es zu irrtümlichen Klassifikationsresultaten kommt, die dann über eine frühere Klassifikationen mit einbeziehende Zuordnung zu einer Belegungsklasse zu einer negativen Auswirkung auf den folgenden Klassifikationsprozess führt.

Wenn die Tür geschlossen wurde, sind zunächst, wenn darnach das Überwachungssystem eingeschaltet wird, Übergänge zwischen den Belegungsklassen sehr wahrscheinlich.

Beispielsweise beugt sich eine Person nach vorn zum Armaturenbrett, um einen Gegenstand aus dem Handschuhfach zu entnehmen. Die Oberfläche der Person entspricht dabei einem rückwärts gerichteten Kindersitz, so dass eine 3D-Kamera die Person als Kindersitz klassifiziert und der Airbag deaktiviert wird, weil bereits aufgrund dieses einmaligen Messergebnisses eine Umklassifizierung von dem Überwachungssystem vorgenommen wird.

Nun beugt sich die Person zurück und begibt sich in eine normale Sitzposition. Die Klassifikation muss dann wieder ebenso schnell in "Person" geändert werden, damit der Airbag wieder aktiviert wird. Auf eine falsche Anfangsklassifikation nach dem Schließen der Tür muss hier also sehr schnell reagiert werden.

Im Gegensatz dazu soll jedoch die Klassifikation "Person" beibehalten werden, wenn sich die Person nach längerer Fahrt nach vorn beugt und das aktuelle Klassifikationsergebnis als "Kindersitz" ausfällt.

Da ein Übergang zwischen zwei Belegungsklassen mit zunehmender Zeit nach dem Schließen der Tür weniger realistisch ist, werden auch die Übergangswahrscheinlichkeiten entsprechend abgesenkt. Diese fallen beispielsweise proportional zum Ablauf der Zeit, oder sie sind umgekehrt proportional zur Zeit.

Derartige zeitabhängige Übergangswahrscheinlichkeiten lassen sich auf folgende Weise implementieren:
1. Die Anpassung erfolgt über die Zeit, z. B., indem die Zahl der letzten Klassifikationen, über die gemittelt wird, mit jeder weiteren Klassifikation erhöht wird.
2. Die Anpassung wird nur auf den Fall "Person normal sitzend" beschrankt. Solange nicht über einen bestimmten Zeitraum mit hoher Wahrscheinlichkeit die Klassifikation "Person normal sitzend" erfolgt ist, wird davon ausgegangen, dass es sich bei dem Objekt auf dem Sitz um einen Kindersitz handelt. Dies bedeutet, dass eine Anpassung davon abhängig gemacht wird, dass uber einen in dem Überwachungssystem festgelegten Zeitraum in der Vergangenheit eine hohe Zugehörigkeitswahrscheinlichkeit zu der Belegungsklasse bestanden haben muss, damit das Überwachungssystem zu dieser Belegungsklasse zuruckkehrt.
3. Die Anpassung kann auch über die Stabilität des Klassifikationsergebnisses erfolgen: Wenn sich das Klassifikationsergebnis und die entsprechenden Zugehörigkeitswahrscheinlichkeiten auf einen stabilen Klassifikationszustand eingeschwungen haben, werden die Ubergangswahrscheinlichkeiten so angepasst, dass der stabilisierte Klassifikationszustand nicht mehr durch temporare Schwankungen in den Zugehörigkeitswahrscheinlichkeitswerten gestort werden kann.

Durch die Erfindung wird ein Überwachungssystem für einen Fahrzeuginnenraum geschaffen, bei dem Wechsel in der Belegung eines Sitzplatzes, beispielsweise mit einer Person P, einem Kindersitz K, bei einem leeren Sitz L oder bei Belegung in einer anderen Belegungsklasse in einer Recheneinheit durch Übergangswahrscheinlichkeiten realisiert sind, die dem Überwachungssystem von außen vorgegeben sind und die die Schnelligkeit der Berücksichtigung eines Wechsels in der Belegung durch das Überwachungssystem wiedergeben. Hiervon hängt dann ab, ob für den jeweiligen Sitzplatz ein zugehöriger Airbag oder eine andere Sicherheitseinrichtung aktiviert wird oder abgeschaltet wird.

## Patentansprüche

1. Überwachungssystem für einen Fahrzeuginnenraum mit einer Einrichtung zur Erfassung von den Belegungszustand eines Ortes in dem Fahrzeuginnenraum wiedergebenden Daten und mit einer Recheneinheit zur Gewinnung von Zugehörigkeitswahrscheinlichkeiten zu Belegungsklassen für einen ausgewählten Ort in dem Fahrzeuginnenraum mit Hilfe von den Belegungszustand eines Ortes in dem Fahrzeuginnenraum wiedergebenden Merkmalen aus Messdaten der Einrichtung,
**dadurch gekennzeichnet,**
**dass** die Recheneinheit mit einem Speicher in Verbindung stellt, im dem Übergangswahrscheinlichkeiten zwischen den Belegungsklassen abgelegt sind, gemäß denen Übergänge zwischen den Belegungsklassen eintreten.

2. Überwachungssystem nach Anspruch 1,
**dadurch gekennzeichnet,**
**dass** ein Schwellwert festgelegt ist und dass die Merkmale erst dann einer Belegungsklasse zugewiesen sind, wenn sie oberhalb des Schwellwerts liegen.

3. Überwachungssystem nach Anspruch 1 oder 2, **dadurch gekennzeichnet, dass** das Überwachungssystem mit einem Schalter oder Sensor zur Erfassung des Öffnungszustandes mindestens einer Tür des Fahrzeugs ausgestattet ist, dass die Recheneinheit mit dem Schalter bzw. dem Sensor über eine Datenleitung verbunden ist und dass Daten des Schalters bzw. des Sensors in der Recheneinheit auswertbar sind.

4. Überwachungssystem nach Anspruch 3, **dadurch gekennzeichnet, dass** durch die Recheneinheit durch einen Algorithmus die Übergangswahrscheinlichkeiten zwischen den Belegungsklassen in Abhängigkeit vom Öffnungszustand der Tür einstellbar sind.

5. Überwachungssystem nach einem der Ansprüche 1 bis 4, **dadurch gekennzeichnet, dass** die Übergangswahrscheinlichkeiten in dem Speicher als Matrixelemente abgelegt sind.

6. Überwachungssystem nach einem der Ansprüche 1 bis 5, **dadurch gekennzeichnet, dass** die Übergangswahrscheinlichkeiten Zahlenwerte sind, die die Anzahl von Klassifikationszyklen verkörpern, nach denen ein Wechsel eines Belegungszustandes von einer Belegungsklasse in eine andere Belegungsklasse als eingetreten gilt.

7. Verfahren zur Überwachung eines Fahrzeuginnenraums, wobei Daten gemessen werden, die den Belegungszustand eines Ortes in dem Fahrzeuginnenraum wiedergeben, und wobei Zugehörigkeitswahrscheinlichkeiten zu Belegungsklassen für einen ausgewählten Ort in dem Fahrzeuginnenraum mit Hilfe von den Belegungszustand eines Ortes in dem Fahrzeuginnenraum wiedergebenden Merkmalen aus gemessenen Daten gewonnen werden,
**dadurch gekennzeichnet,**
**dass** Übergangswahrscheinlichkeiten zwischen den Belegungsklassen bestimmt werden, gemäß denen Übergänge zwischen den Belegungsklassen eintreten.

8. Verfahren nach Anspruch 7, **dadurch gekennzeichnet, dass** die Übergangswahrscheinlichkeiten darnach festgelegt werden, wie wahrscheinlich der Übergang angesehen wird.

9. Verfahren nach Anspruch 7 oder 8, **dadurch gekennzeichnet, dass** die Übergangswahrscheinlichkeiten darnach festgelegt werden, wie zuverlässig die Zugehörigkeitswahrscheinlichkeiten gewonnen werden.

10. Verfahren nach einem der Ansprüche 7 bis 9, **dadurch gekennzeichnet, dass** die Übergangswahrscheinlichkeiten darnach festgelegt werden, wie relevant sie für die Sicherheit einer Person sind.

11. Verfahren nach einem der Ansprüche 7 bis 10, **dadurch gekennzeichnet, dass** die Übergangswahrscheinlichkeiten in Abhängigkeit von der Zeit oder dem Bewegungszustand des Fahrzeugs verändert werden.

12. Verfahren nach einem der Ansprüche 7 bis 11, **dadurch gekennzeichnet, dass** die Werte für die Zugehörigkeitswahrscheinlichkeiten durch Mittelung zeitlich geglättet werden.

13. Verfahren nach Anspruch 12, **dadurch gekennzeichnet, dass** durch eine auf einen Zeitraum bezogene Gewichtung von Zugehörigkeitswahrscheinlichkeiten durchgeführt wird.

14. Verfahren nach Anspruch 13, **dadurch gekennzeichnet, dass** aktuelle Zugehorigkeitswahrscheinlichkeiten im Vergleich zu früher ermittelten Zugehörigkeitswahrscheinlichkeiten stärker gewichtet werden.

15. Verfahren nach einem der Ansprüche 7 bis 14, **dadurch gekennzeichnet, dass** die Übergangswahrscheinlichkeiten in Abhängigkeit vom Öffnungszustand einer Tür des Fahrzeugs festgelegt werden.

16. Verfahren nach Anspruch 15, **dadurch gekennzeichnet, dass**, während die Tür geöffnet ist, eine Sicherheitseinrichtung zum Schutz von Personen und/oder Objekten in dem Fahrzeuginnenraum abgeschaltet bleibt.

17. Verfahren nach Anspruch 15 oder 16, **dadurch gekennzeichnet, dass** ein Airbag abgeschaltet bleibt, solange die Tür geöffnet ist.

18. Verfahren nach einem der Ansprüche 15 bis 17, dass nach dem Schließen der Tür hohe Ubergangswahrscheinlichkeiten für Ubergange zwischen den Belegungsklassen zugelassen werden und dass die Ubergangswahrscheinlichkeiten im Lauf der Zeit abgesenkt werden.

19. Verfahren nach Anspruch 18, **dadurch gekennzeichnet, dass** uber Ergebnisse von Klassifikationen eines Belegungszustandes zu Belegungsklassen des Sitzes je Belegungsklasse eine Mittelwertbildung vorgenommen wird, wobei die Anzahl der in die Mittelwertbildung einfließenden Ergebnisse im Laufe der Zeit erhöht wird.

20. Verfahren nach Anspruch 18, **dadurch gekennzeichnet, dass** uber Ergebnisse einer Klassifikation eines Belegungszustandes zu der Belegungsklasse "Person normal sitzend" eine Mittelwertbildung vorgenommen wird und dass, wenn nicht über einen vorgegebenen Zeitraum mit hoher Zugehörigkeitswahrscheinlichkeit eine Zuordnung zu der belegungsklasse "Person normal sitzend" vorgenommen wird, dem Sitz die Belegungsklasse "Kindersitzen" zugewiesen wird.

21. Verfahren nach Anspruch 18, **dadurch gekennzeichnet, dass** die Übergangswahrscheinlichkeiten zwischen Belegungsklassen in Abhängigkeit von Schwankungen der Zugehörigkeitswahrscheinlichkeiten angepasst werden.

## Claims

1. System for monitoring the interior of a vehicle having a device for detecting data representing the occupancy state of a location in the interior of a vehicle and having a computing unit for obtaining association probabilities with respect to occupancy classes for a selected location in the interior of a vehicle with the aid of features representing the occupancy state of a location in the interior of a vehicle from measurement data of the device,
**characterized**
**in that** the computing unit is connected to a memory in which are stored transitional probabilities between the occupancy classes in accordance with which transitions occur between the occupancy classes.

2. Monitoring system according to Claim 1,
**characterized**
**in that** a threshold value is defined, and in that the features are allocated to an occupancy class only when they lie above the threshold value.

3. Monitoring system according to Claim 1 or 2, **characterized in that** the monitoring system is equipped with a switch or sensor for detecting the opening state of at least one door of the vehicle, **in that** the computing unit is connected to the switch or the sensor via a data line, and **in that** data of the switch or of the sensor can be evaluated in the computing unit.

4. Monitoring system according to Claim 3, **characterized in that** the transitional probabilities between the occupancy classes can be set in a manner dependent on the opening state of the door by the computing unit by means of an algorithm.

5. Monitoring system according to one of Claims 1 to 4, **characterized in that** the transitional probabilities are stored in the memory as matrix elements.

6. Monitoring system according to one of Claims 1 to 5, **characterized in that** the transitional probabilities are numerical values which embody the number of classification cycles after which a change in an occupancy state from one occupancy class to another occupancy class is deemed to have occurred.

7. Method for monitoring the interior of a vehicle, data representing the occupancy state of a location in the interior of a vehicle being measured, and association probabilities with respect to occupancy classes for a selected location in the interior of a vehicle being obtained with the aid of features representing the occupancy state of a location in the interior of a vehicle from measured data,
**characterized**
**in that** transitional probabilities between the occupancy classes in accordance with which transitions occur between the occupancy classes are determined.

8. Method according to Claim 7, **characterized in that** the transitional probabilities are defined according to how probable the transition is considered to be.

9. Method according to Claim 7 or 8, **characterized in that** the transitional probabilities are defined according to how reliably the association probabilities are obtained.

10. Method according to one of Claims 7 to 9, **characterized in that** the transitional probabilities are defined according to how relevant they are to the safety of a person.

11. Method according to one of Claims 7 to 10, **characterized in that** the transitional probabilities are varied in a manner dependent on time or the movement state of the vehicle.

12. Method according to one of Claims 7 to 11, **characterized in that** the values for the association probabilities are smoothed with respect to time by averaging.

13. Method according to Claim 12, **characterized in that** a weighting of association probabilities which is referred to a period of time is carried out.

14. Method according to Claim 13, **characterized in that** current association probabilities are weighted more strongly in comparison with association probabilities determined earlier.

15. Method according to one of Claims 7 to 14, **characterized in that** the transitional probabilities are defined in a manner dependent on the opening state of a door of the vehicle.

16. Method according to Claim 15, **characterized in that**, while the door is open, a safety device for protecting persons and/or objects in the interior of a vehicle remains deactivated.

17. Method according to Claim 15 or 16, **characterized in that** an airbag remains deactivated as long as the door is open.

18. Method according to one of Claims 15 to 17, **characterized in that**, after the closing of the door, high transitional probabilities are permitted for transitions between the occupancy classes, and **in that** the transitional probabilities are lowered over the course of time.

19. Method according to Claim 18, **characterized in that** an averaging is performed over results of classifications of an occupancy state with respect to occupancy classes of the seat per occupancy class, the number of results which have an influence on the averaging being increased over the course of time.

20. Method according to Claim 18, **characterized in that** an averaging is performed over results of a classification of an occupancy state with respect to the occupancy class "person sitting normally", and **in that**, if an assignment to the occupancy class "person sitting normally" is not performed over a predetermined period of time with a high association probability, the seat is allocated the occupancy class "child seated".

21. Method according to Claim 18, **characterized in that** the transitional probabilities between occupancy classes are adapted in a manner dependent on fluctuations in the association probabilities.

## Revendications

1. Système de surveillance, pour un espace intérieur de véhicule, comprenant un dispositif destiné à capter des données qui reproduisent l'état d'occupation d'un emplacement dans l'espace intérieur du véhicule, et comprenant une unité de calcul destinée à déterminer les probabilités d'appartenance à des classes d'occupation pour l'emplacement dans l'espace intérieur du véhicule à l'aide de caractéristiques tirées de données de mesures de dispositif et qui reproduisent l'état d'occupation de l'emplacement dans l'espace intérieur du véhicule,**caractérisé en ce que**,
l'unité de calcul est en liaison avec une mémoire dans laquelle sont enregistrées des probabilités de passage entre les classes d'occupation, selon lesquelles les passages entre les classes d'occupation se produisent.

2. Système de surveillance selon la revendication 1, **caractérisé en ce que**,
on fixe un seuil et les caractéristiques ne sont affectées à une classe d'occupation que lorsqu'elles se trouvent au-dessus du seuil.

3. Système de surveillance selon la revendication 1 ou 2, **caractérisé en ce que**,
le système de surveillance est équipé d'un interrupteur ou d'un capteur destiné à détecter l'état d'ouverture d'au moins une porte du véhicule, **en ce que** l'unité de calcul est reliée à l'interrupteur ou au capteur par une ligne de données et **en ce que** les données de l'interrupteur ou du capteur peuvent être traitées dans l'unité de calcul.

4. Système de surveillance selon la revendication 3, **caractérisé en ce que**,
l'unité de calcul peut régler, par un algorithme, les probabilités de passage entre les classes d'occupation en fonction de l'état d'ouverture de la porte.

5. Système de surveillance selon une des revendications 1 à 4, **caractérisé en ce que**,
les probabilités de passage sont enregistrées dans la mémoire sous la forme d'éléments d'une matrice.

6. Système de surveillance selon une des revendications 1 à 5, **caractérisé en ce que**,
les probabilités de passage sont des valeurs numériques qui matérialisent le nombre des cycles de classification d'après lesquels un changement d'un état d'occupation d'une classe d'occupation à une autre classe d'occupation est considéré comme produit.

7. Procédé de surveillance de l'espace intérieur d'un véhicule, dans lequel on mesure des données qui reproduisent l'état d'occupation d'un endroit situé dans l'espace intérieur du véhicule, et où on obtient des probabilités d'appartenance à des classes d'occupation pour un endroit sélectionné dans l'espace intérieur du véhicule à l'aide de données de caractéristiques reproduisant l'état d'occupation d'un endroit dans l'espace intérieur du véhicule qui sont tirés de données mesurées, **caractérisé en ce que**
on détermine des probabilités de passage entre les classes d'occupation selon lesquelles des passages entre les classes d'occupation se produisent.

8. Procédé selon la revendication 7, **caractérisé en ce que**
les probabilités de passage sont fixées d'après la vraisemblance du passage.

9. Procédé selon la revendication 7 ou 8, **caractérisé en ce que**
les probabilités de passage sont fixées d'après le fait que les probabilités d'appartenance sont obtenues de façon fiable.

10. Procédé selon une des revendications 7 à 9, **caractérisé en ce que**
les probabilités de passage sont fixées en fonction du fait qu'elles sont importantes pour la sécurité d'une personne.

11. Procédé selon une des revendications 7 à 10, **caractérisé en ce que**
les probabilités de passage sont modifiées en fonction du temps ou de l'état de mouvement du véhicule.

12. Procédé selon une des revendications 7 à 11, **caractérisé en ce que**
les valeurs pour les probabilités d'appartenance sont lissées dans le temps par formation d'une moyenne.

13. Procédé selon la revendication 12, **caractérisé**
**par** l'exécution d'une pondération des probabilités d'appartenance rapportés à une période.

14. Procédé selon la revendication 13, **caractérisé en ce que**
les probabilités d'appartenance actuelles sont pondérées plus fortement, comparativement à des probabilités d'appartenance obtenues antérieurement.

15. Procédé selon une des revendications 7 à 14, **caractérisé en ce que**
les probabilités de passage sont fixées en fonction de l'état d'ouverture d'une porte du véhicule.

16. Procédé selon la revendication 15, **caractérisé en ce que**
pendant que la porte est ouverte, un dispositif de sécurité pour la protection de personnes et/ou d'objets situés dans l'espace intérieur du véhicule reste déconnecté.

17. Procédé selon la revendication 15 ou 16, **caractérisé en ce que**
un coussin gonflable reste déconnecté aussi longtemps que la porte est ouverte.

18. Procédé selon une des revendications 15 à 17, **caractérisé en ce que**
après la fermeture de la porte, on admet de hautes probabilités de passage pour les passages entre les classes d'occupation et **en ce que** les probabilités de passage décroissent avec le temps.

19. Procédé selon la revendication 18, **caractérisé en ce que**
d'après les résultats de classification d'un état d'occupation, on procède à une formation de moyennes pour les classes d'occupation du siège, classe par classe, le nombre des résultats qui entrent dans la formation de moyennes s'élevant au cours du temps.

20. Procédé selon la revendication 18, **caractérisé en ce que**
au moyen des résultats d'une classification d'un état d'occupation, de la classe d'occupation « personne normalement assise », on procède à une formation de moyennes et **en ce que**, lorsque, sur une durée prédéterminée, une affectation à la classe d'occupation « personne normalement assise » est effectuée avec une grande probabilité d'appartenance, la classe d'occupation « sièges d'enfant » est attribuée à ce siège.

21. Procédé selon la revendication 18, **caractérisé en ce que**
les probabilités de passage entre les classes d'occupation sont adaptées en fonction de fluctuations des probabilités d'appartenance.
